# EUROPEAN PATENT APPLICATION

(11) **EP 3 498 495 A1**
(43) Date of publication of application: **19.06.2019**
(21) Application number: 19155456.7
(22) Date of filing: 19.10.2012
(51) Int. Cl.: B60C 7/20, B60C 7/00, B60C 7/10, B60C 7/22, B60C 7/14, B60B 9/04

(54) **NON-PNEUMATIC TIRE**

(30) Priority: 20.10.2011 JP 2011230680
(62) Divisional of application: 12842653.3
(71) Applicant: Bridgestone Corporation, Chuo-Ku Tokyo 104-8340 (JP)
(72) Inventor: ABE, Akihiko, Tokyo, 187-8531 (JP); NISHIDA, Masashi, Tokyo, 187-8531 (JP)
(74) Representative: Oxley, Robin John George

(57) **Abstract**

A non-pneumatic tire (1) comprising: a mounting body (11) that is mounted on a vehicle axle; a ring component (14) that is provided with an inner cylindrical body (12) that is fitted onto the outside of the mounting body (11), and an outer cylindrical body (13) that encircles the inner cylindrical body (12) from the outside in the radial direction of the tire (1); and a plurality of linking components (15) that are lined up along the circumferential direction of the tire between the inner cylindrical body (12) and the outer cylindrical body (13), and that link together these two cylindrical bodies (12, 13) such that they can be elastically displaced relative to each other, wherein the ring component (14) and the plurality of linking components (15) are formed integrally as a single unit; a plurality of protruding bar portions (12a) that protrude inwards in the tire radial direction are provided at a distance from each other in the tire circumferential direction on the inner circumferential surface of the inner cylindrical body (12) configured to extend for the entire length of this inner circumferential surface in the tire transverse direction; a plurality of key groove portions (18a) are formed in the outer circumferential surface of the outer ring portion (18) of the mounting body (11) at a distance from each other in the tire circumferential direction configured to be recessed towards the inner side in the tire radial direction and configured to also extend in the tire transverse direction; and a plurality of hole rows (18c) that are formed at a distance from each other in the tire transverse direction by creating a plurality of weight reduction holes that penetrate the outer ring portion (18) in the tire radial direction are formed apart from each other in the tire circumferential direction in the mounting body (11) and are located between mutually adjacent key groove portions (18a) in the tire circumferential direction.

## Description

### Technical Field

The present invention relates to a non-pneumatic tire that does not need to be filled with compressed air when being used. Priority is claimed on Japanese Patent Application No. 2011-230680, filed October 20, 2011, the contents of which are incorporated herein by reference.

The present application is a divisional application of European patent application no. 12842653.3.

### Background Art

In recent years, in conventional pneumatic tires that are used after the interior thereof has been filled with compressed air, considering the structure of such tires, the occurrence of punctures is an unavoidable problem.

In order to solve this problem, a non-pneumatic tire such as that disclosed, for example, in Patent document 1 (see below) that is provided with a mounting body that is mounted on a vehicle axle, a ring-shaped body that encircles the mounting body from the outside in the radial direction of the tire, and a plurality of linking components that are lined up in the circumferential direction of the tire between the mounting body and the ring-shaped body has been proposed.

### Document of Related Art

### Patent documents

[Patent document 1] Japanese Unexamined Patent Application (JP-A) No. 2011-156905

### Summary of Invention

### Technical Problem

However, in a conventional non-pneumatic tire, when the tire is being assembled it is necessary to join both end portions of each one of the plurality of linking components one-by-one to the ring-shaped body and the mounting body. Accordingly, not only does the manufacturing of the tire require a considerable length of time, but the plurality of linking components are an impediment to any lightening of the weight of the tire.

The present invention was conceived in view of the above-described circumstances, and it is an object thereof to provide a non-pneumatic tire that is easy to assemble, and whose weight can be kept in check.

### Solution to Problem

In order to solve the aforementioned problems and achieve the above-described objects, a non-pneumatic tire according to a first aspect of the present invention is provided with a mounting body that is mounted on a vehicle axle, and a ring component that is provided with an inner cylindrical body that is fitted onto the outside of the mounting body and an outer cylindrical body that encircles the inner cylindrical body from the outside in the radial direction of the tire. This non-pneumatic tire is also provided with a plurality of linking components that are lined up along the circumferential direction of the tire between the inner cylindrical body and the outer cylindrical body, and that link together these two cylindrical bodies such that they can be elastically displaced relative to each other. Moreover, the ring component and the plurality of linking components are formed integrally as a single unit.

### Effects of the Invention

According to the present invention, it is possible to obtain a non-pneumatic tire that is easy to assemble, and whose weight can be kept in check.

### Brief description of the drawings

FIG. 1 is a schematic perspective view showing in exploded form a portion of a non-pneumatic tire according to an embodiment of the present invention.
FIG. 2 is a side view of the non-pneumatic tire shown in FIG. 1 as seen from one side in the transverse direction of the tire.
FIG. 3 is a plan view as seen from one side in the transverse direction of the tire of a first separate case body of the non-pneumatic tire shown in FIG. 1 that is formed by uniting a one-side separate ring portion and a first elastic linking plate into a single body, or, alternatively, is a plan view as seen from the other side in the transverse direction of the tire of a second separate case body of the non-pneumatic tire shown in FIG. 1 that is formed by uniting an other-side separate ring portion and a second elastic linking plate into a single body.
FIG. 4 is an enlarged view showing principal portions of FIG. 2.

### Description of Embodiments

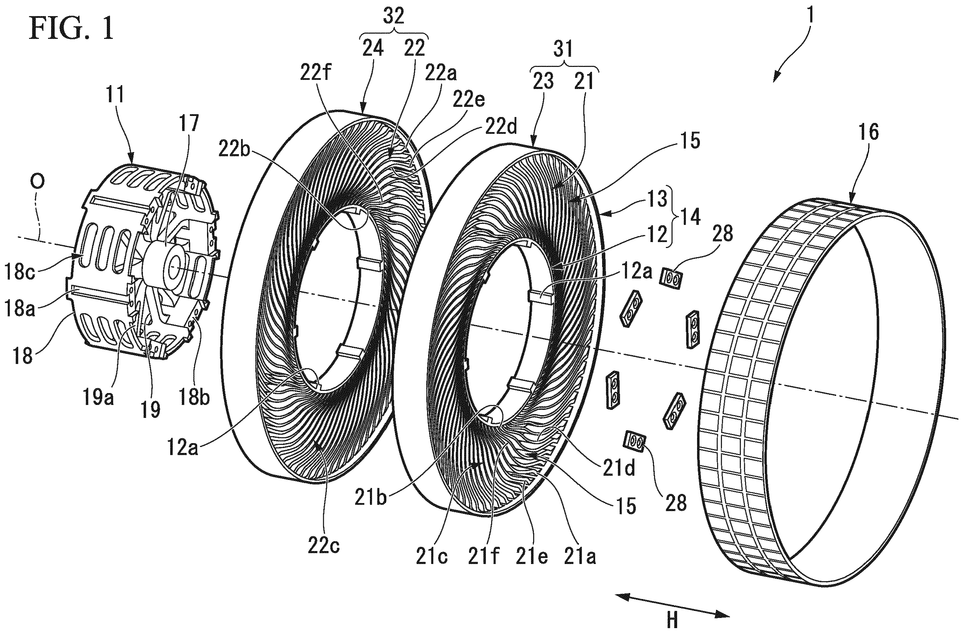

Hereinafter, an embodiment of a non-pneumatic tire of the present invention will be described with reference made to FIG. 1 through FIG. 4.

A non-pneumatic tire 1 is provided with a mounting body 11 that is mounted on a vehicle axle (not shown), and a ring component 14 that has an inner cylindrical body 12 that is fitted onto the outside of the mounting body 11 and an outer cylindrical body 13 that encircles the inner cylindrical body 12 from the outside in the tire radial direction. In addition, the non-pneumatic tire 1 is also provided with a plurality of linking components 15 that are lined up in the circumferential direction of the tire between the inner cylindrical body 12 and the outer cylindrical body 13, and that link the two cylindrical bodies 12 and 13 together such that they can be freely elastically displaced relatively to each other, and with a tread component 16 that is provided so as to extend around the entire outer circumferential surface of the outer cylindrical body 13.

The mounting body 11, the inner cylindrical body 12, the outer cylindrical body 13, and the tread component 16 are placed coaxially around a common axis. Hereinafter, this common axis will be referred to as an axis O, and a direction that is parallel to the axis O will be referred to as a tire transverse direction H, while a direction that is orthogonal to the axis O will be referred to as a tire radial direction, and a direction that orbits around the axis O will be referred to as a tire circumferential direction. Note that the mounting body 11, the inner cylindrical body 12, the outer cylindrical body 13, and the tread component 16 are all positioned such that the center portions in the tire transverse direction H of each of them all coincide with each other.

The size in the tire transverse direction H (in other words, the width) of the outer cylindrical portion 13 of the ring component 14 is larger than that of the inner cylindrical portion 12. A plurality of protruding bar portions 12a that protrude inwards in the tire radial direction are provided at a distance from each other in the tire circumferential direction on the inner circumferential surface of the inner cylindrical body 12 so as to extend for the entire length of this inner circumferential surface in the tire transverse direction H.

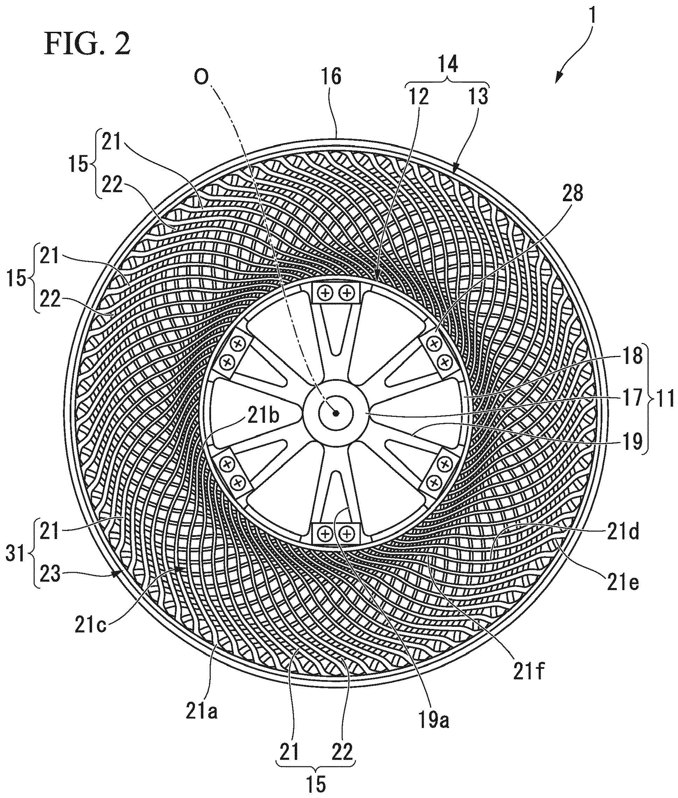

As is shown in FIG. 1 and FIG. 2, the mounting body 11 is provided with a mounting cylinder portion 17 that is mounted on a distal end portion of the vehicle axle, an outer ring portion 18 that encircles the mounting cylinder portion 17 from the outer side thereof in the tire radial direction, and a plurality of ribs 19 that link together the mounting portion 17 and the outer ring portion 18.

The mounting cylinder portion 17, the outer ring portion 18, and the ribs 19 are formed as a single integral unit from a metal material such as, for example, an aluminum alloy or the like. The mounting cylinder portion 17 and the outer ring portion 18 are formed in a circular cylinder shape, and are centered on the same axis as the axis O. The plurality of ribs 19 are placed in point symmetry with the axis O taken as a reference.

A plurality of key groove portions 18a are formed in the outer circumferential surface of the outer ring portion 18 at a distance from each other in the tire circumferential direction so as to be recessed towards the inner side in the tire radial direction and so as to also extend in the tire transverse direction H. The key groove portions 18a are only open on one side of the two ends in the tire transverse direction H on the outer circumferential surface of the outer ring portion 18, and the other side of these two ends is closed off. The protruding bar portions 12a of the inner cylindrical body 12 of the ring component 14 engage individually with these key groove portions 18a.

Note that, of the wall surfaces that form the key groove portions 18a, the pair of side wall surfaces that are opposite each other in the tire circumferential direction meet the bottom wall surface at right angles. Moreover, of the external surfaces of the protruding rib portions 12a, the pair of side wall surfaces that stand upright from the inner circumferential surface of the inner cylindrical body 12 also meet the apex wall surface thereof that faces towards the inside in the tire radial direction at right angles. The sizes in the tire circumferential direction of the protruding bar portions 12a and the key groove portions 18a are substantially the same as each other.

Recessed portions 18b are formed at positions that correspond to the key groove portions 18a in an edge portion on one side in the tire transverse direction H of the outer ring portion 18. These recessed portions 18b are hollowed out towards the other side in the tire transverse direction H, and are formed such that plate components 28 are able to fit inside them. Through holes are formed in the plate components 28. Female threaded portions that continue on from the through holes formed in the plate components 28 that are fitted into the recessed portions 18b are formed in the particular wall surface from among the wall surfaces that form the recessed portions 18b that faces towards the aforementioned one side in the tire transverse direction H. Note that a plurality of these female threaded portions and through holes are formed at a distance from each other in the tire circumferential direction.

When the inner cylindrical body 12 has been fitted onto the outside of the mounting body 11, and the protruding bar portions 12a have been engaged in the key groove portion 18a, bolts are screwed into the female threaded portions via the through holes in the plate components 28 that have been fitted into the recessed portions 18b. As a result of this, the ring component 14 is firmly fixed to the mounting body 11. In this state, the protruding bar portions 12a are sandwiched in the tire transverse direction H by the plate components 28 and by the other end wall surface from among the wall surfaces forming the recessed portion 18b that is located at the aforementioned other end in the tire transverse direction H and faces towards the aforementioned one end side.

Note that in those portions of the outer ring portion 18 that are located between mutually adjacent key groove portions 18b in the tire circumferential direction, a plurality of hole rows 18c that are formed at a distance from each other in the tire transverse direction H by creating a plurality of weight reduction holes that penetrate the outer ring portion 18 in the tire radial direction are formed apart from each other in the tire circumferential direction. Moreover, weight reduction holes 19a are also formed penetrating the ribs 19 in the tire transverse direction H.

The tread component 16 is formed in a circular cylinder shape, and is formed as a single unit so as to cover the entire outer circumferential surface of the outer cylindrical portion 13 of the ring component 14. The tread component 16 is formed, for example, from natural rubber and/or vulcanized rubber that is formed by vulcanizing a rubber composition, or from a thermoplastic material or the like. Examples of the thermoplastic material include thermoplastic elastomers or thermoplastic resins or the like. Examples of a thermoplastic elastomer include amide-based thermoplastic elastomers (TPA) as stipulated in, for example, JIS K6418, ester-based thermoplastic elastomers (TPC), olefin-based thermoplastic elastomers (TPO), styrene-based thermoplastic elastomers (TPS), urethane-based thermoplastic elastomers (TPU), thermoplastic vulcanizates (TPV), and other thermoplastic elastomers (TPZ) and the like. Examples of a thermoplastic resin include urethane resins, olefin resins, vinyl chloride resins, and polyamide resins. Note that, from the standpoint of abrasion resistance, it is preferable for the tread component 16 to be formed from vulcanized rubber.

The linking components 15 are provided with first elastic linking plates 21 and second elastic linking plates 22 that link together the inner cylindrical body 12 and the outer cylindrical body 13 in the ring component 14.

A plurality (60 in the example shown in the drawings) of the linking components 15 are provided running in the tire circumferential direction such that a plurality of the first elastic linking plates 21 are lined up in the tire circumferential direction at one position in the tire transverse direction H, and such that a plurality of the second elastic linking plates 22 are lined up in the tire circumferential direction at another position in the tire transverse direction H that is different from the aforementioned one position in the tire transverse direction H.

Namely, a plurality of the first elastic linking plates 21 are lined up in the tire circumferential direction at the same position in the tire transverse direction H. Meanwhile, a plurality of the second elastic linking plates 22 are lined up in the tire circumferential direction at the same position in the tire transverse direction H and separated in the tire transverse direction H from the first elastic linking plates 21.

Note also that the plurality of linking components 15 are positioned individually between the inner cylindrical body 12 and the outer cylindrical body 13 of the ring component 14 so as to be in point symmetry relative to each other when the axis O is used as a reference. In addition, all of the linking components 15 have an identical shape and size. Furthermore, the width of the linking components 15 is smaller than the width of the outer cylindrical body 13.

The first elastic linking plates 21 that are mutually adjacent to each other in the tire circumferential direction are placed so as not to come into contact with each other. The second elastic linking plates 22 that are mutually adjacent to each other in the tire circumferential direction are also placed so as not to come into contact with each other. Furthermore, the first elastic linking plates 21 and second elastic linking plates 22 that are mutually adjacent to each other in the tire transverse direction H are also placed so as not to come into contact with each other.

The respective widths of the first elastic linking plates 21 and the second elastic linking plates 22 are substantially identical to each other. The respective thicknesses of the first elastic linking plates 21 and the second elastic linking plates 22 are also substantially identical to each other.

Of the first elastic linking plates 21, one end portions 21a thereof that are connected to the outer cylindrical body 13 are positioned closer to one side in the tire circumferential direction than other end portions 21b thereof that are connected to the inner cylindrical body 12. Moreover, of the second elastic clinking plates 22, one end portions 22a thereof that are connected to the outer cylindrical body 13 are positioned closer to the other side in the tire circumferential direction than other end portions 22b thereof that are connected to the inner cylindrical body 12.

Each of the one end portions 21a and 22a of the first elastic linking plates 21 and the second elastic linking plates 22 of a single linking component 15 are joined to the same position in the tire circumferential direction on the inner circumferential surface of the outer cylindrical body 13 but at mutually different positions in the tire transverse direction H.

In the example shown in the drawings, in a tire side view in which the tire 1 is viewed from the tire transverse direction H, a plurality of curved portions 21d to 21f and 22d to 22f that are curved in the tire circumferential direction are seen to be formed, in parallel with the direction in which the linking plates 21 and 22 extend, in intermediate portions 21c and 22c that are positioned between the one end portions 21a and 22a and the other end portions 21b and 22b in each of the first elastic linking plates 21 and the second elastic linking plates 22. In each of the two sets of linking plates 21 and 22, of the plurality of curved portions 21d to 21f and 22d to 22f, the direction of the curvature of each of those curved portions 21d to 21f and 22d to 22f that are mutually adjacent in the aforementioned direction in which the linking plates 21 and 22 extend face in mutually opposite directions.

The plurality of curved portions 21d to 21f that are formed in the first elastic linking plates 21 have the first curved portion 21d that is curved such that it protrudes towards the aforementioned other side in the tire circumferential direction. Moreover, the plurality of curved portions 21d to 21f also have the second curved portion 21e that is positioned between the first curved portion 21d and the one end portion 21a and that is curved such that it protrudes towards the aforementioned one side in the tire circumferential direction, and the third curved portion 21f that is positioned between the first curved portion 21d and the other end portion 21b and that is curved such that it protrudes towards the one side in the tire circumferential direction.

The plurality of curved portions 22d to 22f that are formed in the second elastic linking plates 22 have the first curved portion 22d that is curved such that it protrudes towards the aforementioned one side in the tire circumferential direction. Moreover, the plurality of curved portions 22d to 22f also have the second curved portion 22e that is positioned between the first curved portion 22d and the one end portion 22a and that is curved such that it protrudes towards the aforementioned other side in the tire circumferential direction, and the third curved portion 22f that is positioned between the first curved portion 22d and the other end portion 22b and that is curved such that it protrudes towards the other side in the tire circumferential direction.

In the example shown in the drawings, when the tire is viewed from the side, the radius of curvature of the first curved portions 21d and 22d is greater than that of the second curved portions 21e and 22e and the third curved portions 21f and 22f. Note that the first curved portions 21d and 22d are placed in a central portion in the direction in which the first elastic linking plates 21 and the second elastic linking plates 22 extend.

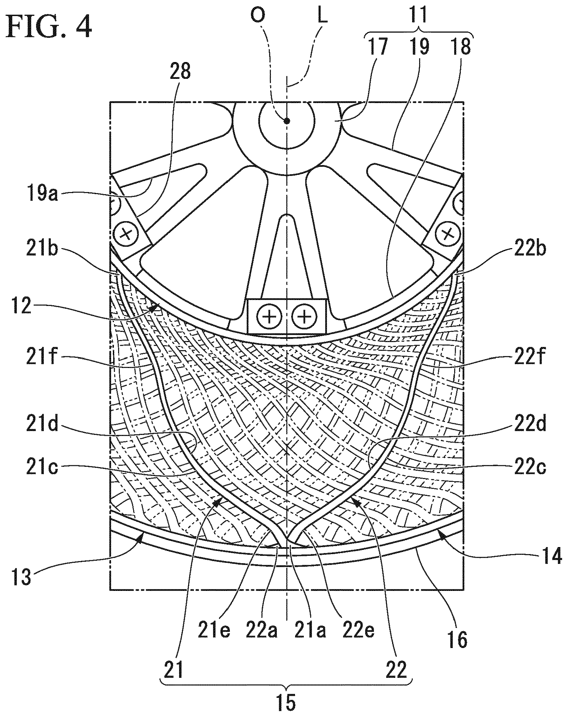

As is shown in FIG. 4, the respective lengths of the two sets of elastic linking plates 21 and 22 are substantially the same as each other, and, when the tire is viewed from the side, the respective other end portions 21b and 22b of the two sets of elastic linking plates 21 and 22 are individually linked to a plurality of positions that are offset from the respective one end portions 21a and 22a by the same angle (for example, between 20° and 135°) on the one side and on the other side in the tire circumferential direction centered around the axis O from positions that face each other in the tire radial direction. Moreover, the directions in which the first curved portions 21d and 22d of the first elastic linking plates 21 and the second elastic linking plates 22 protrude in the tire circumferential direction are mutually opposite, the directions in which the second curved portions 21e and 22e protrude in the tire circumferential direction are also mutually opposite, and the directions in which the third curved portions 21f and 22f protrude in the tire circumferential direction are also mutually opposite. In addition, the sizes of the mutually opposite curved portions are substantially the same as each other.

As is shown in FIG. 4, the shape of each linking component 15 when the tire is viewed from the side extends in the tire radial direction, and has line symmetry around a imaginary line L that passes through the respective one end portions 21a and 22a of each set of linking plates 21 and 22.

Moreover, in each of the two sets of elastic linking plates 21 and 22, the thickness of the one end portions from a center portion in the aforementioned direction in which the linking plates extend as far as the one end portions 21a and 22a is greater than the thickness of the other end portions from the aforementioned center portion as far as the other end portions 21b and 22b. As a consequence of this, at the same time as any increase in the weight of the linking components 15 is suppressed, and the flexibility of the linking components 15 is maintained, the strength of the one end portions of the first and second elastic plates 21 and 22, which is where a sizable load tends to be applied, can be increased. Note that these one end portions and other end portions are smoothly continuous with each other without there being any difference in height between them.

In the present embodiment, the ring component 14 and the plurality of linking components 15 are formed as a single unit

As is shown in FIG. 1, the ring component 14 is separated into a one-side separate ring component 23 that is positioned on one side in the tire transverse direction H, and an other-side separate ring component 24 that is positioned on the other side in the tire transverse direction H. In the example shown in the drawings, the ring component 14 is separated at a center portion in the tire transverse direction H.

The one-side separate ring component 23 is formed integrally as a single unit with the first elastic linking plates 21, while the other-side separate ring component 24 is formed integrally as a single unit with the second elastic linking plates 22.

Furthermore, the one-side separate ring component 23 and the first elastic linking plates 21 are formed as a single unit either by casting or by extrusion molding. In addition, the other-side separate ring component 24 and the second elastic linking plates 22 are formed as a single unit either by casting or by extrusion molding.

Hereinafter, the component formed by integrating the one-side separate ring component 23 and the first elastic linking plates 21 into a single unit will be referred to as a first separate case body 31, while the component formed by integrating the other-side separate ring component 24 and the second elastic linking plates 22 into a single unit will be referred to as a second separate case body 32.

The extrusion molding may be a typical extrusion molding method in which the entire first separate case body 31 and the entire second separate case body 32 are formed individually at the same time. The extrusion molding may be insert molding in which, in each of the first and second separate case bodies 31 and 32, one of the one-side separate ring components 23 and other-side separate ring components 24 and one of the first elastic linking plates 21 and second elastic linking plates 22 are used as an insert while the other is extrusion molded. Alternatively, the extrusion molding may also be what is known as two-color molding or the like.

Moreover, in each of the first and second separate case bodies 31 and 32, it is also possible for each of the one-side separate ring components 23 and other-side separate ring components 24 and each of the first elastic linking plates 21 and second elastic linking plates 22 to be formed from mutually different materials, or to be formed from the same material. Note that examples of this material include metals and resins and the like, however, from the standpoint of reducing weight, resins, and particularly thermoplastic resins, are preferable.

Note also that if the entire first separate case body 31 and the entire second separate case body 32 are individually extrusion molded at the same time, then the plurality of protruding bar portions 12a that are formed on the inner cylindrical body 12 may be used as gate portions.

In the respective first and second separate case bodies 31 and 32, central portions in the tire transverse direction H of the first and second elastic linking plates 21 and 22, a central portion in the tire transverse direction H of the outer cylindrical body 13, and a central portion in the tire transverse direction H of the inner cylindrical body 12 all mutually coincide with each other. The width of the inner cylindrical body 12 is smaller than the width of the outer cylindrical body 13, while the width of the first elastic linking plates 21 is substantially the same as the width of the second elastic linking plates 22.

Edges in the tire transverse direction H of each of the outer cylindrical body 13 of the one-side separate ring component 23 and the outer cylindrical body 13 of the other-side separate ring component 24 are joined together, for example, by welding, fusion, or adhesion or the like. Of these methods, if welding is used, then, for example, thermal plate welding or the like may be employed.

Furthermore, edges in the tire transverse direction H of each of the inner cylindrical body 12 of the one-side separate ring component 23 and the inner cylindrical body 12 of the other-side separate ring component 24 are separated from each other in the tire transverse direction H. As a result of this, it is possible to prevent burrs from occurring on the inner circumferential surface of the inner cylindrical body 12 that fits around the outside of the mounting body 11.

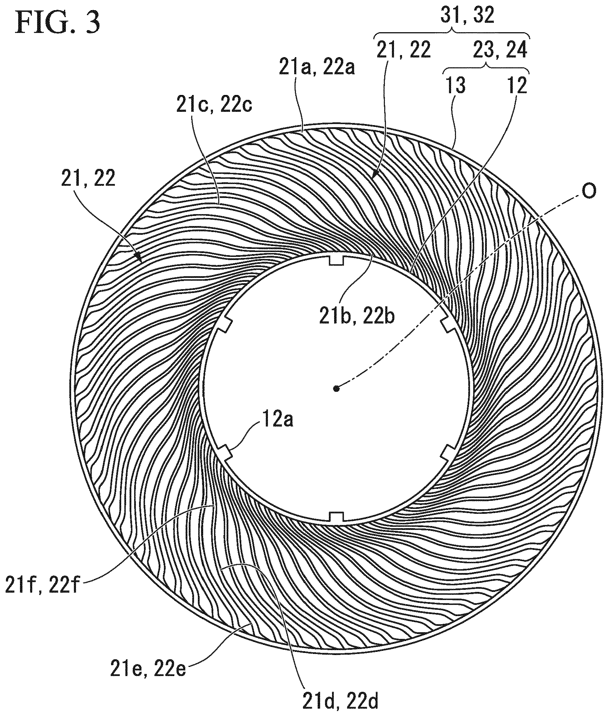

Moreover, as is shown in FIG. 3, prior to the first separate case body 31 and the second separate case body 32 being joined together, these separate cases 31 and 32 have the same shape and same size as each other.

When, as is described above, these separate cases 31 and 32 are joined together, the positions of the first separate case body 31 and the second separate case body 32 in the tire circumferential direction are matched with each other, and the orientations in the tire transverse direction H of the two separate case bodies 31 and 32 are made to be the opposite of each other such that, when the tire is viewed from the side, the respective linking components 15 have line symmetry, as was described above. In this state, the respective edges in the tire transverse direction H of the respective outer cylindrical bodies 13 of the first separate case body 31 and the second separate case body 32 are abutted against each other and are joined together. As a result of this, the non-pneumatic tire 1 is obtained.

As has been described above, according to the non-pneumatic tire 1 of the present embodiment, there are provided a first separate case body 31 in which the one-side separate ring component 23 and the first elastic linking plates 21 are formed integrally as a single unit, and a second separate case body 32 in which the other-side separate ring component 24 and the second elastic linking plates 22 are formed integrally as a single unit. Because of this, when the non-pneumatic tire 1 is being assembled, it is sufficient to simply attach the first and second separate case bodies 31 and 32 to the mounting body 11 without having to join the two end portions 21a, 22a, 21b, and 22b of the plurality of linking components 15 individually to the inner cylindrical body 12 and the outer cylindrical body 13. Accordingly, it is possible to shorten the time required to manufacture the tire.

Moreover, compared with when the two end portions 21a, 22a, 21b, and 22b of the plurality of linking components 15 are joined respectively to the inner cylindrical body 12 and the outer cylindrical body 13, it is possible to obtain a non-pneumatic tire 1 that is extremely rigid against stress that is concentrated in the integrally molded curved portions (namely, the curved portions of the inner cylindrical body 12, the outer cylindrical body 13, the first separate case body 31, and the second separate case body 32).

Moreover, the non-pneumatic tire 1 is provided with the first and second separate case bodies 31 and 32. As a result, it is possible to obtain a weight reduction compared with when the two end portions 21a, 22a, 21b, and 22b of the linking components 15 are joined to the inner cylindrical body 12 and the outer cylindrical body 13 by means of fastening components or the like.

Furthermore, a plurality of the first elastic linking plates 21 are lined up in the tire circumferential direction at one position in the tire transverse direction H, and a plurality of the second elastic linking plates 22 are lined up in the tire circumferential direction at another position in the tire transverse direction H. Accordingly, it is possible to prevent the connecting components 15 that are mutually adjacent to each other in the tire circumferential direction from interfering with each other, so that any limitation imposed on the number of linking components 15 that may be employed is removed.

Moreover, the one end portion 21a of each first elastic plate 21 that is connected to the outer cylindrical body 13 is positioned further to the aforementioned one side in the tire circumferential direction than the other end portion 21b thereof that is connected to the inner cylindrical body 12. Furthermore, the one end portion 22a of each second elastic plate 22 that is connected to the outer cylindrical body 13 is positioned further to the aforementioned other side in the tire circumferential direction than the other end portion 22b thereof that is connected to the inner cylindrical body 12. Because of this, it is possible to make the first elastic linking plates 21 and the second elastic linking plates 22 easily deformable when an external force is applied to the non-pneumatic tire 1. Accordingly, the non-pneumatic tire 1 is furnished with pliability, and a superior riding quality can be ensured.

Furthermore, in each of the first separate case body 31 and the second separate case body 32, a plurality of only one of the first elastic linking plates 21 and the second elastic linking plates 22 are provided extending in a fixed direction, when the tire is viewed from the side, between the outer cylindrical body 13 and the inner cylindrical body 12, and none of the other linking plates are provided extending in another direction. Because of this, when the ring component 14 and the linking components 15 are being formed, firstly, the first and second separate cases 31 and 32 that have a simple structure and can be formed easily are formed individually. As a result of this, compared with when a case body in which the entire ring component 14 and linking components 15 are formed as a single unit and that has a complex structure is formed, the non-pneumatic tire 1 can be formed easily and reliably.

Moreover, each of the first and second separate case bodies 31 and 32 are formed as a single unit either by casting or by extrusion molding. Because of this, the non-pneumatic tire 1 can be formed even more easily.

Furthermore, as has been described above, in each of the separate case bodies 31 and 32, only one of the two sets of elastic linking plates 21 and 22 is provided between the outer cylindrical body 13 and the inner cylindrical body 12. As a result of this, when the respective separate case bodies 31 and 32 are being formed integrally either by casting or by extrusion molding, it is possible for the molten metal or molten resin to easily and reliably reach the innermost portions inside the mold, so that it is possible to prevent the structure of the mold from becoming too complex. Accordingly, it is possible to form the non-pneumatic tire 1 even more easily and reliably.

Moreover, when the tire is viewed from the side, the linking components 15 are formed having line symmetry around a imaginary line L. Because of this, it is possible to prevent any difference being generated between the spring constant along one side in the tire circumferential direction in the non-pneumatic tire 1 and the spring constant along the other side in this tire circumferential direction, so that the non-pneumatic tire 1 is furnished with superior controllability.

Note that the range of technology of the present invention is not limited to the above-described embodiment, and various modifications and the like may be made insofar as they do not depart from the spirit or scope of the present invention.

For example, the curvature direction of the curved portions 21d to 21f in the first elastic linking plates 21, and the curvature direction of the curved portions 22d to 22f in the second elastic linking plates 22 are not limited to those in the above-described embodiment and may be altered as is appropriate.

Moreover, in the above-described embodiment, a structure is shown in which one of the first elastic connecting plates 21 and one of the second elastic linking plates 22 are used together to form one linking component 15, however, instead of this, it is also possible to employ a structure in which a plurality of the first elastic linking plates 21 and a plurality of the second elastic linking plates 22 are provided at mutually different positions from each other in the tire transverse direction H in order to form one linking component 15.

Moreover, it is also possible for a plurality of the linking components 15 to be provided running in the tire transverse direction H between the inner cylindrical body 12 and the outer cylindrical body 13.

Furthermore, unlike in the above-described embodiment, it is also possible, for example, for the other end portions 21b and 22b of the first elastic linking plates 21 and the second elastic linking plates 22 to be individually connected to positions on the outer circumferential surface of the inner cylindrical body 12 that are opposite each other on either side of the axis O in the tire radial direction. Alternatively, it is also possible for the other end portions 21b and 22b to be joined to positions that are opposite the respective one end portions 21a and 22a of the first elastic linking plates 21 and the second elastic linking plates 22 in the tire radial direction.

Moreover, unlike in the above-described embodiment, it is also possible for the respective one end portions 21a and 22a of the two sets of elastic linking plates 21 and 22 to be joined to the inner circumferential surface of the outer cylindrical body 13 at mutually different positions in the tire circumferential direction.

Furthermore, it is not necessary for the gap to be provided in the tire transverse direction H between the inner cylindrical body 12 of the one-side separate ring component 23 and the inner cylindrical body 12 of the other-side separate ring component 24.

Moreover, it is also possible for the ring component 14 to be separated into three or more components in the tire transverse direction H, or for the ring component 14 to be left as a single, unseparated component.

Furthermore, the first and second separate case bodies 31 and 32 are not limited to those in the above-described embodiment, and it is also possible for these to be formed, for example, by machining processing or the like.

In addition to these, the various component elements in the above-described embodiments can also be replaced, where suitable, with known component elements insofar as they do not depart from the spirit or scope of the present invention, and the above-described variant examples may also be used in various appropriate combinations.

Next, verification tests were performed for the operations and effects described above.

For the Example, the non-pneumatic tire 1 shown in FIG. 1 through FIG. 4 was employed, while for the Comparative example, a non-pneumatic tire described in the documents of the prior art (see above) was employed. Note that the size of both tires was the same.

The times required to assemble the two tires, as well as the weights of the two tires were measured.

As a result, it was confirmed that the time required to assemble the non-pneumatic tire of the Example was one hundredth of the time required to assemble the non-pneumatic tire of the Comparative example, and that the weight of the non-pneumatic tire of the Example was 25% lighter than the weight of the non-pneumatic tire of the Comparative example.

### Industrial applicability

According to the present invention, it is possible to obtain a non-pneumatic tire that can be easily assembled and whose weight has been kept to a minimum.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims. Description of Reference Signs
- 1: Non-pneumatic tire
- 11: Mounting body
- 12: Inner cylindrical body
- 13: Outer cylindrical body
- 14: Ring component
- 15: Linking components
- 21: First elastic linking plates
- 22: Second elastic linking plates
- 21a, 22a: One end portion
- 22a, 22b: Other end portion
- 23: One-side separate ring component
- 24: Other-side separate ring component
- H: Tire transverse direction
- L: Imaginary line
- O: Axis

The present application discloses a non-pneumatic tire according to the following clauses:
1. A non-pneumatic tire comprising:
   a mounting body that is mounted on a vehicle axle;
   a ring component that is provided with an inner cylindrical body that is fitted onto the outside of the mounting body, and an outer cylindrical body that encircles the inner cylindrical body from the outside in the radial direction of the tire; and
   a plurality of linking components that are lined up along the circumferential direction of the tire between the inner cylindrical body and the outer cylindrical body, and that link together these two cylindrical bodies such that they can be elastically displaced relative to each other, wherein
   the ring component and the plurality of linking components are formed integrally as a single unit.
2. The non-pneumatic tire according to clause 1, wherein
   the linking components are provided with a first elastic linking plate and a second elastic linking plate that link together the two cylindrical bodies, and
   one end portion of each first elastic linking plate that is connected to the outer cylindrical body is positioned further to one side in the tire circumferential direction than another end portion of the first elastic linking plate that is connected to the inner cylindrical body, and
   one end portion of each second elastic linking plate that is connected to the outer cylindrical body is positioned further to the other side in the tire circumferential direction than another end portion of the second elastic linking plate that is connected to the inner cylindrical body, and
   a plurality of the first elastic linking plates are lined up along the tire circumferential direction at one position in the tire transverse direction, while a plurality of the second elastic linking plates are lined up along the tire circumferential direction at another position in the tire transverse direction that is different from the one position in the tire transverse direction.
3. The non-pneumatic tire according to clause 2, wherein
   the ring component is separated into a one-side separate ring component that is positioned on one side in the tire transverse direction, and an other-side separate ring component that is positioned on the other side in the tire transverse direction, and
   the one-side separate ring component is formed integrally as a single unit with the first elastic linking plates, and
   the other-side separate ring component is formed integrally as a single unit with the second elastic linking plates.
4. The non-pneumatic tire according to clause 3, wherein the one-side separate ring component and the first elastic linking plate are formed integrally as a single unit by casting or extrusion molding, and the other-side separate ring component and the second elastic linking plate are also are formed integrally as a single unit by casting or extrusion molding.
5. The non-pneumatic tire according to any one of clauses 2 through 4, wherein the respective one end portions of the first elastic linking plate and the second elastic linking plate in a single linking component are joined to the same position in the tire circumferential direction, but to mutually different positions in the tire transverse direction on an inner circumferential surface of the outer cylindrical body, and
   the linking components are formed such that, in a tire side view in which the tire is viewed from tire transverse direction, they have line symmetry relative to a imaginary line that extends in the tire radial direction and passes through the respective one end portions.

## Claims

1. A non-pneumatic tire (1) comprising:
a mounting body (11) that is mounted on a vehicle axle;
a ring component (14) that is provided with an inner cylindrical body (12) that is fitted onto the outside of the mounting body (11), and an outer cylindrical body (13) that encircles the inner cylindrical body (12) from the outside in the radial direction of the tire (1); and
a plurality of linking components (15) that are lined up along the circumferential direction of the tire between the inner cylindrical body (12) and the outer cylindrical body (13), and that link together these two cylindrical bodies (12, 13) such that they can be elastically displaced relative to each other, wherein
the ring component (14) and the plurality of linking components (15) are formed integrally as a single unit;
a plurality of protruding bar portions (12a) that protrude inwards in the tire radial direction are provided at a distance from each other in the tire circumferential direction on the inner circumferential surface of the inner cylindrical body (12) configured to extend for the entire length of this inner circumferential surface in the tire transverse direction;
a plurality of key groove portions (18a) are formed in the outer circumferential surface of the outer ring portion (18) of the mounting body (11) at a distance from each other in the tire circumferential direction configured to be recessed towards the inner side in the tire radial direction and configured to also extend in the tire transverse direction; and
a plurality of hole rows (18c) that are formed at a distance from each other in the tire transverse direction by creating a plurality of weight reduction holes that penetrate the outer ring portion (18) in the tire radial direction are formed apart from each other in the tire circumferential direction in the mounting body (11) and are located between mutually adjacent key groove portions (18a) in the tire circumferential direction.
